# EUROPÄISCHE PATENTANMELDUNG

(11) **EP 3 260 510 A1**
(43) Veröffentlichungstag der Anmeldung: **27.12.2017**
(21) Anmeldenummer: 17177130.6
(22) Anmeldetag: 21.06.2017
(51) Int. Cl.: C09J 7/02, A63B 71/14

(54) **HAFTTAPE**

(30) Priorität: 21.06.2016 DE 102016111360
(71) Anmelder: Förderkreis Handball TV Spaichingen, 78549 Spaichingen (DE)
(72) Erfinder: Kupferschmid, Egon, 78549 Spaichingen (DE); Merkt, Holger, 78549 Spaichingen (DE); Baier, Markus, 75849 Spaichingen (DE); Honer, Georg, 78549 Spaichingen (DE); Schuhmacher, Dominik, 78549 Spaichingen (DE); Klaiber, Kurt, 78549 Spaichingen (DE); Wenzler, Andreas, 78549 Spaichingen (DE)
(74) Vertreter: Spachmann, Holger

(57) **Zusammenfassung**

Die Erfindung betrifft ein Hafttape (14) zur Anbringung an einer Hand (10) und / oder an mindestens einem Finger (12) zur Unterstützung einer Haftung eines Balles (16) an der Hand (10) eines Ballspielers, umfassend zumindest ein, Element (15) mit einer ersten Oberfläche (18), einer zweiten Oberfläche (20) und zumindest einen Randabschnitt (17a, 17b).

Erfindungsgemäß wird vorgeschlagen, dass das Element (15) aus einem elastischen Trägerband (13) besteht, das intrinsische Adhäsionseigenschaften oder Selbstklebeeigenschaften aufweist, wobei die erste Oberfläche (18) zumindest bereichsweise eine haftende Beschichtung (22) aufweist, oder zumindest ein Randabschnitt (17) mit einem zweiten Tape (44) haftend verbunden ist, das eine haftende Oberfläche (44a) und eine nichthaftende Oberfläche (44b) aufweist, wobei die erste Oberfläche (18) des Trägerbands (13) oder die haftende Oberfläche (44a) des Tapes (44) zumindest teilweise um einen Finger (12) und / oder die Hand (10) gewickelt und / oder flächig und / oder punktuell auf einem Finger (12) und / oder auf die Hand (10) aufklebbar ist, wobei die zweite Oberfläche (20) des elastischen Trägerbands (13), bevorzugt aus einer Kunst-, Kautschuk- oder Silikonfolie, insbesondere der Polyurethanfolie (13a) oder Silikonfolie (13b), mit einem Ball (16) kontaktierbar ist und an einem Ball (16) haftbar ist.

## Beschreibung

Die Erfindung betrifft ein Hafttape zur Anbringung an einer Hand und / oder an mindestens einem Finger zur Unterstützung der Haftung eines Balles oder dergleichen an der Hand und / oder den Fingern eines Ballspielers bzw. einer Ballspielerin.

Weiterhin betrifft die Erfindung ein Set mit einem derartigen Hafttape sowie eine Rolle zur Aufbewahrung.

### STAND DER TECHNIK

Aus dem Stand der Technik sind Bandagen, Tapes oder sonstige Materialien zur Anbringung an den Händen zur Erhöhung der Haftung der Hände für Sportler von Ballsportarten bekannt. In handgeführten Ballsportarten, wie beispielsweise im Handball wird hierzu exemplarisch Ballharz eingesetzt, um die Haftung beim Greifen des Balles zu erhöhen. Das Ballharz hilft den Sportlern den Ball einfacher zu halten, zu werfen und zu drehen. Es entsteht ein 100 %-iger Kontakt zwischen Ball und Hand. Ohne Harz kann dieser Kontakt durch den Staub des Bodens, oder Feuchtigkeit durch Schwitzen sehr stark beeinflusst werden. Ebenso benutzen viele Sportler ein Tape, um die Verletzungsgefahr der Kapseln und Gelenke im Fingerbereich zu minimieren.

Die DE 93 18 299 U zeigt einen Sporthandschuh, wobei der die Handinnenfläche bedeckende Teil ein harzunempfindliches Material aufweist. Dort kann Ballharz aufgetragen werden, wodurch die Fang- und Abwurfsicherheit weiter erhöht wird.

Die US 9 205 002 B2 offenbart ein therapeutisches Tape zur Behandlung von muskulären Verspannungen oder zur Stimulation der Muskulatur oder Durchblutung sowie zum Bandagieren. Das Tape umfasst eine haftende und strukturierte Oberfläche mit Rippen und Kerben zum Aufkleben auf der Haut.

Die US 2004 / 0045071 A1 offenbart eine Art Überzieher aus einem elastischen Material, vergleichbar zu einem Handschuh, zu Erhöhung des Fingergrip beim Anfassen von beispielsweise Bällen, Drinkgläsern oder Golfschlägern. Der Überzieher wird aus einem sich verjüngenden Schlauch gebildet, mit mindestens einer Öffnung am Ende des Schlauches und einer Zwischenöffnung. Der Überzieher wird derart über den Finger gesteckt, dass die Zwischenöffnung am mittleren oder vorderen Fingergelenk anliegt, sodass das Gelenk von außen sichtbar wird. An der Öffnung können Elemente zum Anpassen des Durchmessers des Überziehers an die Dicke des Fingers angebracht sein. Die Oberfläche des Überziehers kann strukturiert sein, um die Haftung zu erhöhen. Der Überzieher hat keinen haftenden Kontakt zum Finger. Die Fixierung erfolgt über Anpassung an die Fingerdicke.

In der DE 20 2014 002 091 U1 wird ein Hafttape bestehend aus einem Träger mit zweiseitiger Beschichtung vorgestellt, wobei die Beschichtung der Oberseite Gripp erzeugende und geringrutschende Eigenschaften aufweist und die Unterseite mit einer hautfreundlichen Selbstklebemasse beschichtet ist. Insoweit weist das vorbekannte Hafttape einen dreischichtigen Aufbau mit einem Trägermaterial und einer zur Hand und einer zum Ball weisenden weiteren Beschcihtung auf. Mit einem derartigen Hafttape kann der Gripp und die Haftung eines Balls an der Hand erhöht werden. Dieses Hafttape weist einen dreischichtigen Aufbau auf, wobei der Träger auf beiden Seiten eine zusätzliche Beschichtung trägt: Die erste, zur handweisende Seite wird mit einer zusätzlichen Selbstklebemasse, z.B. auf Acrylat-Basis versehen und die zum Ball-weisende Seite wird mit einer Antirutsch-Beschichtung wie einer Silikon- oder Polyurethan-Massen versehen. Somit ist das vorgeschlagene Tape in der Herstellung relativ teuer und in der Handhabung ungenügend, da gerade die Antirutsch-Beschichtung entweder keinen vollflächigen Ballkontakt gewährleistet, sich auf Dauer abnutzt oder sich vom Träger lösen kann.

Die Firma Kindmax, abrufbar über die Internetseite Kinesiologie-24.de zeigt Pre-Cut Tapes die für die Anbringung an verschiedenen Körperstellen verschiedene geometrische Formen aufweisen. Das Tape kann unter anderem auf den Schultern, den Beinen oder Armen aufgebracht werden. Dabei eignen sich die Tapes besonders für die Anwendung im sportlichen Bereich, da diese eine Elastizität von über 80 % aufweisen. Die Tapes eignen sich auch für die Anwendung an der Hand bzw. einzelnen Fingern, wobei bereits vorgefertigte Streifen an die Fingerform angepasst sein können. Derartige Tapes besitzen lediglich an der Oberfläche, die der Hand zugewandt ist, eine haftende Wirkung. Sie dienen demnach lediglich zur Unterstützung der Muskulatur bzw. der Sehnen.

Es besteht das Problem, dass in einigen Sporthallen Harzverbote bestehen, da durch dieses Harz eine hohe Verschmutzung durch Harzpartikel in der Halle entsteht. Ebenso entsteht in Sporthallen, in denen die Verwendung von Ballharz erlaubt ist, ein hoher Reinigungsaufwand nach den Spielen, da sich das Harz in der Sporthalle verteilt.

Daneben besteht das Problem, dass aus dem Stand der Technik bekannte Handschuhe oder Hafttapes eine Hand eines Ballspielers zumindest bereichsweise vollumschließen und/oder aufwändig hergestellt sind. Hierdurch kann es zu einer unerwünschten Schwitzwirkung sowie zur Einschränkung der Beweglichkeit kommen, und die verfügbaren Handschuhe sind relativ teuer und aufwändig herzustellen. Bekannte Hafttapes sind zudem entweder durch einen komplizierten bzw. aufwändigen Herstellungsprozess, da auf jeder Seite des Trägermaterials eine Haftschicht aufgebracht werden muss, um auf beiden Seiten des Tapes einen Hafteffekt zu erreichen, oder weisen lediglich auf einer Seite eine Haftwirkung auf.

Aufgabe der Erfindung ist es daher, eine Möglichkeit der Erhöhung der Haftung zwischen Ball und der Hand des Sportlers vorzuschlagen, wobei keine Verschmutzung bzw. Kontaminierung der Umgebung, insbesondere der Sporthallen, entsteht, sodass die Reinigungskosten nach Durchführung der Ballsportarten gering gehalten werden. Ebenso ist es Aufgabe der Erfindung, eine Möglichkeit der Erhöhung der Haftung zwischen Ball und der Hand des Sportlers vorzuschlagen die in Hallen mit Verboten der Verwendung von Ballharz verwendet werden können, wobei der Herstellungsprozess derartiger haftende Hilfsmittel kostengünstig ermöglicht werden soll, wodurch dieses einfach und schnell in großen Mengen herstellbar ist.

Diese Aufgabe wird durch ein Hafttape und einem Set bzw. eine Rolle nach den unabhängigen Ansprüchen gelöst. Vorteilhafte Weiterentwicklungen der Erfindung sind Gegenstand der Unteransprüche.

### OFFENBARUNG DER ERFINDUNG

Gegenstand der Erfindung ist ein Hafttape zur Anbringung an einer Hand und / oder an mindestens einem Finger zur Unterstützung der Haftung eines Balles oder dergleichen an der Hand und / oder den Fingern eines Ballspielers bzw. einer Ballspielerin, umfassend zumindest ein, bevorzugt mehr als ein Element mit einer ersten und einer zweiten Oberfläche, wobei jedes Element zumindest einen Randabschnitt aufweist.

Es wird vorgeschlagen, dass das Element aus einem elastischen Trägerband, bevorzugt aus einer Kunst-, Kautschuk- oder Silikonfolie, insbesondere aus einer Polyurethanfolie oder Silikonfolie, besteht, das intrinsische Adhäsionseigenschaften oder Selbstklebeeigenschaften aufweist, wobei die erste Oberfläche zumindest bereichsweise eine haftende Beschichtung aufweist, oder zumindest ein Randabschnitt mit einem zweiten Tape, insbesondere Kinesiotape, haftend verbunden ist, das eine haftende Oberfläche und eine nicht haftende Oberfläche aufweist, wobei die erste Oberfläche des Trägerbands oder die haftende Oberfläche des Tapes zumindest teilweise um mindestens einen Finger und / oder die Hand gewickelt und / oder flächig und / oder punktuell auf mindestens einem Finger und / oder auf die Hand aufgeklebt wird, wobei die zweite Oberfläche des elastischen Trägerbands, bevorzugt des Kunststoff-, Silikon- oder Kautschukbands, insbesondere der Polyurethanfolie oder Silikonfolie, mit einem Ball kontaktierbar ist und an einem Ball haftbar ist.

Das erfindungsgemäße Hafttape steht in haftendem Kontakt zu mindestens einem Finger und / oder einem Teil der Handfläche und besitzt ebenso eine zweite, Oberfläche, die nicht in Kontakt zu der Oberfläche der Hand steht. Die zweite Oberfläche verbessert die Haftung zwischen einem Ball und der Hand eines Sportlers durch die intrinsischen Adhäsionseigenschaften oder Selbstklebeigenschaft des elastischen Trägerbands. Intrinsische Adhäsionseigenschaften bedeutet, dass das Trägerband eine dem Bandmaterial innewohnende Adhäsionseigenschaft aufweist, die eine Haftwirkung gegenüber anderen Oberflächen bewirkt, und insbesondere eine Haftwirkung gegenüber einer Balloberfläche bewirkt, um eine verbesserte Fang- und Haltewirkung des Balls durch eine Hand oder eines Körperteils ermöglicht.

Das Hafttape basiert somit auf einem Trägerband, das sehr gute haftende Eigenschaften aufweist. Dies kann durch eine Adhäsionseigenschaft bewirkt sein, dies ist ein physikalischer Zustand einer Grenzflächenschicht, die sich zwischen zwei in Kontakt tretenden kondensierten Phasen, d. h. Feststoffen und Flüssigkeiten mit vernachlässigbarem Dampfdruck, ausbildet. Die Haupteigenschaft dieses Zustandes ist der durch molekulare Wechselwirkungen in der Grenzflächenschicht hervorgerufene mechanische Zusammenhalt der beteiligten Phasen. Das Trägerband kann bevorzugt ein Kunststoffband, insbesondere eine elastische Kunststofffolie oder ein Kautschuk oder Silikonband sein. Die Kunststofffolie kann beispielsweise als Polyurethanfolie ausgebildet sein. Weiterhin ist eine Ausführung aus Silikon vorteilhaft möglich. Somit kann jede Art einer PU-Folie zum Einsatz kommen. Dabei kann beispielsweise eine Kunststofffolie der Marke WITHME verwendet werden, die aus einem thermoplastischen Elastomer oder einem Polymer wie Polyolephine oder einer Kombination aus einem thermoplastischen Elastomer und Polymer besteht. Ein derartiges Trägerband, insbesondere eine elastische Kunststofffolie, kann eine Dicke zwischen 200 µm und 400 µm aufweisen. Ebenso sind andere Dicken möglich. Derartige Folien sind sehr elastisch und haben sehr gute Antirutscheigenschaften. Weiterhin können derartige Kunststoffe durch einen Kunststoffschweißprozess unter Heißluft auf textile Materialien geschweißt werden. Dies lässt darauf schließen, dass derartige Kunststoffe unter Hitzeeinwirkung eine verbesserte Hafteigenschaft aufweisen. Beim Einsatz bei jeder Art von Ballsport, wie beispielsweise Handball oder Volleyball, bei welcher ein Ballspieler während des Spiels eine erhöhte Temperatur an den Händen aufweist, wird demnach zusätzlich die Hafteigenschaft der Oberfläche des Trägerbands verbessert. Trotz der hohen Elastizität formen sich derartige Trägerbänder ohne weiteres wieder in die Ausgangskonfiguration bzw. Ausgangsgeometrie zurück. Das gleiche, was für Trägerbänder aus elastischen Kunststofffolien gilt, gilt ebenso für Silikonfolien. Die Trägerbänder können transparent oder nicht transparent ausgebildet sein und können eingefärbt sein, um als Farbkennzeichnung, z.B. für eine Mannschaftszugehörigkeit zu dienen. Es ist weiterhin denkbar, dass die Einfärbung selbstleuchtende, insbesondere phosphoreszierende Eigenschaften zur Erhöhung einer Sichtbarkeit bei verringerter Raumhelligkeit zu gewährleisten.

Weitere mögliche selbstklebende Hafttape-Trägerbänder können als Basismaterial aus Polyethylen (PE), Polyvinylchlorid (PVC), Zellkautschuk-basierende Folien (Ethylen-Propylen-Dien - EPDM, Chloroprenkautschuk-CR, Naturkautschuk-NR) oder Latex-basierte Folien sein, die einseitig oder doppelseitig klebend bereitgestellt werden können.

Im Gegensatz zum vorgenannten Stand der Technik wird somit ein elastisches, selbstklebendes oder adhäsives Trägerband mit einer lediglich zur menschlichen Haut weisende - zumindest bereichsweise - haftende Beschichtung mit einer höheren Haftkraft als die Selbstklebekraft des Trägerbands vorgeschlagen. Alternativ kann das Trägerband durch ein an zumindest einem Randabschnitt des Trägerbands angeklebtes zweites Tape mit der menschlichen Haut verbunden werden. Durch die Selbstklebe- oder Adhäsionskraft des Trägerbands kann ein rutschhemmender Kontakt mit einer Balloberfläche hergestellt werden. Die Anhaftung an der Haut erfolgt entweder an dem überklebenden zweiten Tape oder einer Beschichtung bzw. einer Klebemasse, die vollflächig oder abschnittsweise auf die erste Oberfläche des Trägerbands aufgebracht ist. Die zweite Beschichtung bzw. die Selbstklebemasse ist hautfreundlich und kann auf einer Acrylat-Basis aufgebaut sein, die sich nicht bei Feuchtigkeit oder Schweiß ablöst. Der Kleber muss sowohl auf dem elastischen Trägerband wie auch auf der menschlichen Haut haften, und die Haftkraft gegenüber dem Trägerband und der Haut (H1) muss wesentlich größer als die Haftwirkung des Trägerbands gegenüber dem Ball (H2) sein.

Somit ist statt einem vorbekannten dreischichtigen Aufbau ein einschichtiger oder ggf. zweischichtiger Aufbau des Tapes vorgeschlagen, der sowohl produktionstechnische Vorteile als auch einen einfacheren und zuverlässigen Einsatz im Spiel bietet.

Das vorgeschlagene Tape kann für alle Ballspielarten, bei dem ein Ball durch Hautkontakt geführt wird, wie Handball, Brennball, Volleyball, Basketball, Wasserball, Baseball, Rugby, aber auch bei verwandten Sportarten wie Frisbee, Bumerangspiel, Cricket oder ähnliches eingesetzt werden. Die zusätzliche haftende Beschichtung kann durch einen Kleber erfolgen, der mit der Folie kompatibel und Haut verträglich ist. Dabei können auch Kontakt- oder Zweikomponentenkleber zum Einsatz kommen. Eine derartige Klebeschicht wird nicht durch Feuchtigkeit, beispielsweise durch Schwitzen, geschwächt. Dabei ist die Anwendung des Hafttapes nicht auf eine spezielle Ballsportart begrenzt sondern bei einer Vielzahl von Ballsportarten anwendbar. Ebenso wäre denkbar, ein derartiges Tape nicht nur für eine Ballsportart, sondern auch im Fitnessstudio an verschiedenen Geräten, zu verwenden. Weiterhin ist ein Einsatz in der industriellen Fertigung denkbar, bei welcher eine gute Haftung der Hand eines Bearbeiters und einem zu bearbeitenden Bauteil bzw. Element nötig ist.

Des Weiteren ist es möglich, anstatt einer Klebeschicht ein zweites Tape, insbesondere ein Kinesiotape mit dem Hafttape in zumindest einem Randabschnitt zu verbinden. In dergestalt stellt das Kinesiotape die haftende Eigenschaft zu einem Finger oder einer Hand her, während das Trägerband den haftenden Bereich zu einem Ball oder Ähnlichem herstellt. Der Randabschnitt kann dabei geradlinig oder gekrümmt ausgebildet sein, wobei bevorzugt eine Überlappung zwischen dem Trägerband und dem Tape die Verbindung zwischen beiden herstellt. Das Tape und das Trägerband überlappen sich demnach in diesem Randbereich, wobei die Überlappung zum einen zwischen 0,1 cm und 1,5 cm liegen kann. Weiterhin sind auch Überlappungen größer 1,5 cm möglich.

Bei dem Tape bzw. einem kinesiologischen Tape handelt es sich um ein elastisches, selbstklebendes, therapeutisches Tape aus einem dehnbaren, textilen Material auf das ein Polyacrylatkleber aufgebracht ist. Die Materialeigenschaften sind derart gewählt, dass ein maximales funktionelles Bewegungsmaß ("Free Range of Motion") gewährleistet ist, um ein freies und heilungsorientiertes Training ermöglichen zu können. Dies stellt einen Unterschied zum konventionellen, unelastischen Tapeverband dar, dessen Wirkprinzipien auf Kompression, Schienung und Augmentation beruht. Bei dem Trägermaterial handelt es sich um Baumwollgewebe, welches mit Elastan-Fäden längs durchzogen ist. Darüber hinaus gibt es inzwischen auch, meist für den Einsatz im Sportbereich empfohlene Tape-Varianten, bei denen ein Viskosematerial oder ein nicht näher definiertes synthetisches Material anstatt der Baumwolle verwendet wird. Die Elastizität der Tapes wird in der Regel mit dehnbar bis auf mindestens 130-140 % der ursprünglichen Länge angegeben, in der Regel kann die Dehnbarkeit auch deutlich höher ausfallen. Einzelne Anbieter verweisen auf eine höhere Dehnbarkeit von bis auf 180 %. Dabei sind die Tapes in erster Linie längs-, aber auch schrägelastisch. Dadurch kann das Tape den Gelenkbewegungen sehr gut folgen. Die Elastizitätseigenschaften sollen ähnlich derer der menschlichen Haut hinsichtlich Dicke, Schwere und Dehnfähigkeit sein.

Die Klebefläche des Tapes bzw. des Kinesiotapes wird als haftendes Element verwendet. Die nichthaftende Oberfläche des Kinesiotape steht dabei nicht mit der Oberfläche des Fingers oder der Hand in Kontakt und ist in Richtung eines Kontaktes mit einem Ball oder Ähnliches ausgerichtet. Demnach haftet ein Ball nicht an dieser Oberfläche des Tapes, sondern nur an der Oberfläche des Trägerbands.

Das Hafttape kann aus mehreren einzelnen Elementen bestehen, die alle die gleiche Größe und Form aufweisen der unterschiedliche Geometrien besitzen. Die einzelnen Elemente des Hafttapes können flächig auf die Oberfläche der Hand aufgeklebt werden oder um einzelne Finger gewickelt werden. Die Geometrie der einzelnen Elemente kann dabei an die Bedürfnisse des Sportlers angepasst werden. Die erste Oberfläche kann komplett haftend oder nur in Teilbereichen haftend ausgeführt sein. Dies kann an die Bedürfnisse des Sportlers angepasst werden. Das Hafttape ermöglicht einen 100 %-igen Kontakt zwischen der Hand und dem Ball eines Sportlers. Ein derartiges Hafttape kann auch in Sporthallen mit Ballharzverbot verwendet werden, da keine Verschmutzung der Sporthalle durch Ballharz oder Ähnliches stattfindet. Weiterhin wird der Reinigungsaufwand auch in den Sporthallen minimiert, in denen kein Ballharzverbot existiert. Das Hafttape übernimmt dabei zwei Funktionen: Zum einen die Funktion um die Verletzungsgefahr der Fingerkapseln und Fingergelenke zu minimieren sowie die Funktion der verbesserten Haftung zwischen der Hand eines Sportlers und einem Ball oder dergleichen.

In einer bevorzugten Ausführungsform kann die Haftkraft H1 der Beschichtung eine größere Haftwirkung zwischen dem Finger bzw. der Hand und dem Hafttape aufweisen als die Haftkraft H2 zwischen dem Trägerband und einem Ball, sodass H1 > H2. Dies ermöglicht es, auch einzelne kleinere Elemente des Hafttapes auf der Hand zu platzieren, wobei diese bei einem Kontakt mit einem Ball nicht von der Hand abgezogen werden. Dies ist möglich, wenn die Haftkraft zwischen Hand und Hafttape größer ist als die Haftkraft zwischen Hafttape und Ball.

In einer bevorzugten Ausführungsform kann das Trägerband auf der zweiten Oberfläche profiliert ausgebildet sein, insbesondere eine Fischgrätenstruktur oder eine Haifischhautstruktur aufweisen. Dadurch kann die Hafteigenschaft zwischen der Oberfläche des Hafttapes und einem Ball bzw. Gegenstand weiter verbessert werden. Die Fischkettenstruktur oder die Haifischhautstruktur kann dabei regelmäßig oder unregelmäßig bezüglich der Oberfläche des Hafttapes bzw. dem Trägerband ausgebildet sein. Weiterhin wäre denkbar, eine Gitterstruktur oder einen Lamellenstruktur auf die Oberfläche des Hafttapes anzubringen.

In einer bevorzugten Ausführungsform kann das Trägerband eine Netzstruktur aufweisen, insbesondere als Netz, als Gaze oder als Gewebe ausgebildet sein, und eine Mehrzahl an Löchern aufweisen, wobei die Löcher alle die gleiche Form oder Größe oder unterschiedliche Größen und Formen aufweisen kann. Demnach kann zur Verbesserung der haftenden Eigenschaften des Trägerbands diese ebenso eine Netzstruktur aufweisen. Dabei kann das Trägerband eine mit dem menschlichen Auge sichtbare Maschenweite aufweisen. Das Trägerband kann vorteilhafterweise atmungsaktiv ausgebildet sein, und es können Schweiß und Staub verdrängt werden. Die stellt einen besonderen Vorteil dar, wenn das Hafttape auf einer schwitzenden Hand angeordnet wird, bzw. die Hand in der Zeit, in der das Hafttape bereits dort aufgeklebt ist, zu Schwitzen beginnt.

In einer bevorzugten Ausführungsform kann die Struktur der haftenden Beschichtung als zickzackförmige oder wellenförmige, parallele Streifen auf der ersten Oberfläche ausgebildet sein, sodass zwischen den einzelnen Streifen ein Zwischenraum ausgebildet wird. Die Streifen bilden einen minimal höheren Bereich auf der ersten aus. Die erste des Hafttapes ist durch diese Streifen und Zwischenräume nicht glatt, sondern strukturiert. Durch die wellenförmige oder zickzackförmige Struktur wird eine Deformation in unterschiedliche Richtungen in der Ebene des Hafttapes ermöglicht. Die ermöglicht ein flexibles Aufkleben auf die unterschiedlichen gewölbten Bereiche der Hand und eine anschließende uneingeschränkte Bewegungsfreiheit der Hand, da die Elastizität des Hafttapes optimiert wird. Der Klebstoff kann demnach großflächig, punktuell, strukturiert, wellenförmig oder in anderer Art und Weise aufgebracht werden um die Bewegungsfreiheit und Haftfähigkeit zu gewährleisten.

In einer bevorzugten Ausführungsform können mindestens zwei Finger mindestens einer Hand im Bereich von den Fingerspitzen bis zu den mittleren Fingergelenken mit jeweils einem Element derart umwickelt werden, dass sich die Endbereiche des Hafttapes an jedem Finger um mindestens 3 mm überlappen, oder dass das Tape um jeweils einen Finger und/oder die Hand wickelbar war ist, wobei ein zweiter Randabschnitt des Tapes nach dem Umwickeln ebenso mit dem Element verbindbar ist, sodass eine geschlossene Form entsteht. Werden die Finger in diesem Bereich mit dem Hafttape umwickelt, kann ein Ball besonders gut gefangen, geworfen oder gedreht werden. Um einen besonders guten Halt der umwickelten Elemente des Hafttapes an den Fingern zu gewährleisten ist es vorteilhaft, wenn sich die Enden eines Elements so überlappen, dass eine Haftung des Hafttapes rundum um den jeweiligen Finger gewährleistet ist. Dies kann besonders mit einer Überlappung von 3 mm bis 5 mm gewährleistet werden. Erfolgt die Ausführung zusätzlich mit einem Tape, das in zumindest einem Randabschnitt mit dem Trägerband überlappend verbunden ist, so kann dieses Tape derart um einen Finger gewickelt werden, dass dieses einen zweiten Randabschnitt des Trägerbands derart überlappt, dass eine geschlossene Form entsteht. Eine derart geschlossene Form stellt beispielsweise eine Ringform um einen Fingerabschnitt dar. Bei einer derartigen Ausführung um einen Finger sind die beiden Randabschnitte, an denen das Tape mit dem Trägerband überlappend verbunden ist, bevorzugt parallel zueinander angeordnet. Im aufgeklebten Zustand auf einen Finger ist es demnach vorteilhaft, das Tape auf der Außenseite der Hand, und dem Trägerband an der Innenseite der Hand anzuordnen. So ist das Trägerband, das den haftenden Bereich in dieser Ausführung darstellt, zu einem Kontakt mit einem Ball oder ähnlichem orientiert.

In einer bevorzugten Ausführungsform kann das Tape an einem geradlinigen Randabschnitt mit dem Trägerband linienförmigen verbunden sein, wobei sich das Tape und das Trägerband teilweise überlappen. Dies ist dann vorteilhaft, wenn das Hafttape um einen einzelnen Finger oder auch um mehrere Finger gewickelt wird.

Das Hafttape kann auch doppelt verwendet werden, indem es gefaltet aufgeklebt wird. Dabei können mehrere Schichten des Trägerbands übereinander angeordnet sein.

In einer bevorzugten Ausführungsform kann ein zweites Tape mit einem zweiten Randabschnitt mit dem Trägerband verbunden sein, wobei die beiden Randabschnitte bevorzugt parallel zueinander verlaufen. Dies ist ebenso vorteilhaft bei der Umwicklung einzelner oder mehrerer Finger. Dabei kann das zweite Tape vergleichbar zu dem ersten Tape um jeweils eine Hälfte des Fingers gewickelt werden und sich in einem Kontaktbereich überlappen.

In einer bevorzugten Ausführungsform kann das Hafttape vor einem Gebrauch auf mindestens einer Abziehhilfe angebracht sein. Das Hafttape kann vor dem Gebrauch auf dieser Abziehhilfe aufbewahrt werden, ohne dass die haftenden Oberflächen verschmutzt werden. Bevorzugt ist auf der ersten und zweiten Oberfläche jeweils eine Abziehhilfe angebracht, wobei jede Abziehhilfe separat entfernt werden kann. Die Abziehhilfe auf einer Oberfläche kann mehrteilig ausgeführt sein, um das Abziehen zu erleichtern. Die Abziehhilfe kann aus einer Folie oder einem glatten Material bestehen, sodass das Hafttape ohne Rückstände abgezogen werden kann.

Ebenso kann das Hafttape als Fingerling ausgebildet sein, so dass dieser über einen Finger gezogen werden kann und eine sackartige Form als Fingerling aufweist. In diesem Fall kann auf bei einer geschlossenen, sackähnlichen Form auf eine Selbstklebebeschichtung in Richtung Finger verzichtet werden, so dass das Hafttape als Fingerling nur aus einem formschlafen, hohlzylinderartigen Trägerband besteht.

In einer bevorzugten Ausführungsform kann das Hafttape unterschiedliche Farbgebungen aufweisen, wobei dieses einfarbig oder auch gestreift oder gepunktet ausgestaltet sein kann. Dabei kann beispielsweise auf einfache Weise eine Unterscheidung beziehungsweise Zuordnung unterschiedlicher Finger bzw. Hände zu unterschiedlichen Personen bzw. Ballspielen erfolgen. Dies ist beispielsweise vorteilhaft, wenn regelmäßig eine Unterscheidung unterschiedlicher Spieler verschiedene Ballsportmannschaften in einem Spiel erfolgen soll. Die unterschiedlichen Teams können demnach schnell von einzelnen Spielern erkannt werden.

Gegenstand der Erfindung ist weiterhin ein Set umfassend mindestens ein erfindungsgemäßes Hafttape.

Es wird vorgeschlagen, dass das Set das mindestens ein Element des Hafttapes in einer Form auf einer Abziehhilfe anordnet, so dass bei Auflegen einer Hand auf eine Auflageschablone auf der Abziehhilfe das mindestens eine Hafttape an der zu beklebenden Stelle an der Hand angeordnet wird und an dieser Stelle an der Hand haftet und von der Abziehhilfe abgezogen wird. Die Anziehhilfe umfasst dafür eine Auflageschablone in beispielsweise einer Handform oder in der Form einzelner Finger. Innerhalb des Bereichs der Auflageschablone, der die Hand oder den Finger darstellt, ist mindesten ein Element des Hafttapes an einer beliebigen Stelle angeordnet. Das Element ist mit der zweiten Oberfläche auf der Abziehhilfe angebracht. Der Sportler legt nun seine Hand in die Auflageschablone, die einen Umriss der Hand darstellt, und drückt die Handfläche und die einzelnen Finger so auf die Abziehhilfe, dass das Hafttape an seiner Hand anhaftet. Das Hafttape haftet nun mit der ersten Oberfläche an der Hand. Nun kann die Abziehhilfe abgezogen werden, wobei das Hafttape an der Hand verbleibt. Bevorzugt umfasst ein Set mehrere Elemente des Hafttapes, die zur Anbringung an einer Hand vorgesehen sind. Es können somit gespiegelte Ausführungen des Sets für die rechte und linke Hand vorgefertigt werden. Die Oberfläche, auf die die Hand aufgelegt wird, kann zuvor ebenso mit einer Abdeckfolie geschützt werden, die zuvor abgezogen werden muss.

In einer bevorzugten Ausführungsform des Sets kann die Auflagenschablone als Handform und / oder Fingerform ausgebildet sein und auf die Abziehhilfe aufgedruckt, eingestanzt oder perforiert werden. Die Auflagenschablone verbleibt nach dem Abziehen des Hafttapes auf der Abziehhilfe. Die Abziehhilfe kann auch mehrmals verwendet werden.

In einer bevorzugten Ausführungsform des Sets kann das Set für Damen und Herren unterschiedlich ausgebildet sein, wobei das Hafttape für Damen und Herren unterschiedliche Abmessungen aufweist. Die Auflagenschablone kann an die Abmessungen unterschiedlicher Hand und Fingergrößen und -längen angepasst werden. Ebenso kann die Größe und Position der einzelnen Elemente des Hafttapes an unterschiedliche Bedürfnisse der männlichen und weiblichen Sportler angepasst werden.

In einer bevorzugten Ausführungsform des Sets kann das Set für Links- und Rechtshänder, sowie für unterschiedliche Handgrößen, insbesondere Damen, -Herren und Kindergrößen unterschiedlich ausgebildet ist, wobei das Hafttape für verschiedene Größen unterschiedliche Abmessungen aufweist. So kann beispielsweise das Hafttape für verschiedene Spielertypen derart unterschiedlich ausgebildet sein, dass das Hafttape unterschiedliche Haftkräfte H1 und / oder H2 aufweist, wobei die Haftkräfte H1 und / oder H2 beispielsweise an die Geschwindigkeiten und Beschleunigungen des Balles bei einem Herren- bzw. Damen-Ballspiel, insbesondere Handballspiel angepasst werden. Durch die unterschiedlichen Spielgeschwindigkeiten sind für verschiedene Spielertypen, z.B. männliche und weibliche Sportler unterschiedliche Haftungen zwischen Ball und Hafttape sowie zwischen Hafttape und Hand erforderlich. Durch die Anpassung der Klebekraft, d. h. unterschiedlich starker Kleber, auf der Oberfläche und die Anpassung der Dicke des Hafttapes oder unter Einsatz unterschiedlicher Trägerbänder können so die unterschiedlichen Bedürfnisse abgedeckt werden.

Gegenstand der Erfindung ist weiterhin eine Rolle mit einem erfindungsgemäßen Hafttape.

Es wird vorgeschlagen, dass das Hafttape in Form einer Kleberolle aufgewickelt ist und an der ersten Oberfläche eine Abziehhilfe aufweist, die nach dem Abwickeln des Hafttapes von der Rolle abziehbar ist. Das Hafttape kann dadurch platzsparend gelagert werden. Ebenso können Streifen flexibler Länge abgetrennt werden oder Formen in unterschiedlichen Geometrien ausgeschnitten oder ausgestanzt werden.

### ZEICHNUNGEN

Weitere Vorteile ergeben sich aus den vorliegenden Zeichnungen und Zeichnungsbeschreibungen. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- **Fig. 1**: eine Hand mit einer Ausführungsform eines erfindungsgemäßen Hafttapes;
- **Fig. 2**: eine Seitenansicht eines Fingers einer Hand aus Fig. 1;
- **Fig. 3**: eine Hand mit einer weiteren Ausführungsform eines erfindungsgemäßen Hafttapes;
- **Fig. 4**: eine Seitenansicht eines Fingers einer Hand aus Fig. 3;
- **Fig. 5**: eine Hand mit einer weiteren Ausführungsform eines erfindungsgemäßen Hafttapes;
- **Fig. 6**: eine Seitenansicht eines Fingers einer Hand aus Fig. 5;
- **Fig. 7**: eine Hand mit einer Ausführungsform eines erfindungsgemäßen Hafttapes beim Greifen eines Balles;
- **Fig. 8**: eine erste Oberfläche eines erfindungsgemäßen Hafttapes;
- **Fig. 9**: eine Ausführungsform eines Set, bestehend aus einer Abziehhilfe, einer Auflagenschablone und einem Hafttape;
- **Fig. 10**: eine weitere Ausführungsform eines Set, bestehend aus einer Abziehhilfe, einer Auflagenschablone und einem Hafttape;
- **Fig. 11**: eine weitere Ausführungsform eines Set, bestehend aus einer Abziehhilfe, einer Auflagenschablone und einem Hafttape;
- **Fig. 12**: eine schematische Darstellung der Haftkräfte H1 und H2;
- **Fig. 13**: schematische Darstellung eines Hafttapes, bestehend aus einem Trägerband aus Kunststofffolie und zwei Tapes;
- **Fig. 14**: eine schematische Schnittdarstellung eines um einen Finger gelegten Hafttapes 14, bestehend aus einem Trägerband aus Kunststofffolie und einem Tape, das um einen Finger gewickelt ist.

In den Figuren sind gleiche oder gleichartige Komponenten mit gleichen Bezugszeichen beziffert.

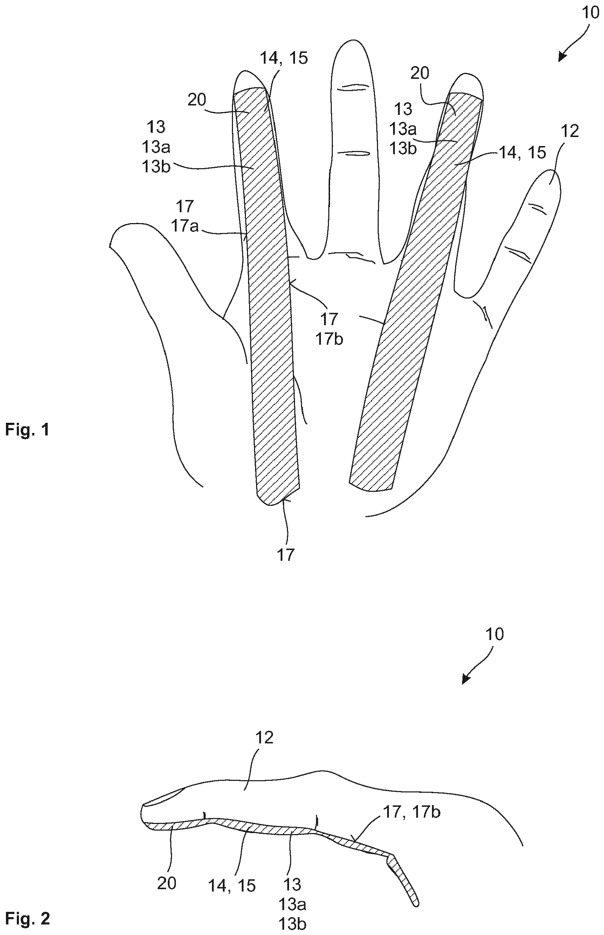

Fig. 1 zeigt eine linke Hand 10 mit angebrachtem Hafttape 14 in einer ersten Ausführungsform. Das Hafttape 14 besteht aus zwei streifenförmigen Elementen 15, die jeweils von der Handinnenfläche über den Mittelfinger bzw. den Ringfinger verlaufen. In der Darstellung ist die zweite Oberfläche 20 des Hafttapes 14 sichtbar, die erste Oberfläche 18 (nicht sichtbar) steht mit der Hand 10 mit der Haftkraft H1 in Kontakt. Die sichtbare zweite Oberfläche 20 unterstützt den Ballsportler beim Fangen, Werfen oder Drehen des Balles. Diese zweite Oberfläche 20 ist eine Oberfläche der elastischen Kunststofffolie als Trägerband 13, wobei die Haftkraft H2 zwischen Ball und der Oberfläche 20 geringer ist als die Haftkraft H1 ist. Dadurch verbleibt das Hafttape 14 auch bei Kontakt mit einem Ball an der Hand 10 bzw. an den Fingern 12 haften. Die elastische Kunststofffolie als Trägerband 13 kann dabei als Polyurethanfolie 13a oder Silikonfolie 13b ausgeführt sein. Die elastische Kunststofffolie als Trägerband 13 weist dabei mehrere Randabschnitte 17, insbesondere die beiden Randabschnitte 17a und 17b auf.

Fig. 2 zeigt den Zeigefinger aus Fig. 1 in einer Seitenansicht. In Fig. 2 wird deutlich, dass das Hafttape aus Fig. 1 nur an der Unterseite der Hand 10 bzw. den Fingern 12 verläuft, und der Beweglichkeit des Fingers 12 folgt.

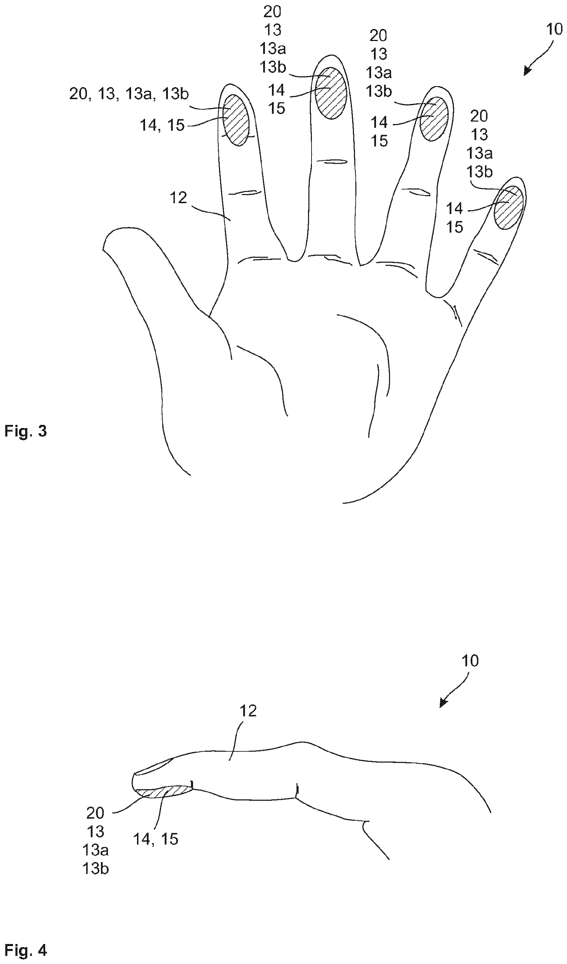

In Fig. 3 ist eine weitere Ausführungsform eines Hafttapes 14 dargestellt. Das Hafttape 14 besteht aus vier einzelnen, elliptischen Elementen 15, die auf die Fingerkuppen der Hand 10 aufgeklebt sind. Eine dazugehörige Seitenansicht zeigt Fig. 4. In den weiteren Ausführungen entspricht diese Ausführung der aus Fig. 1.

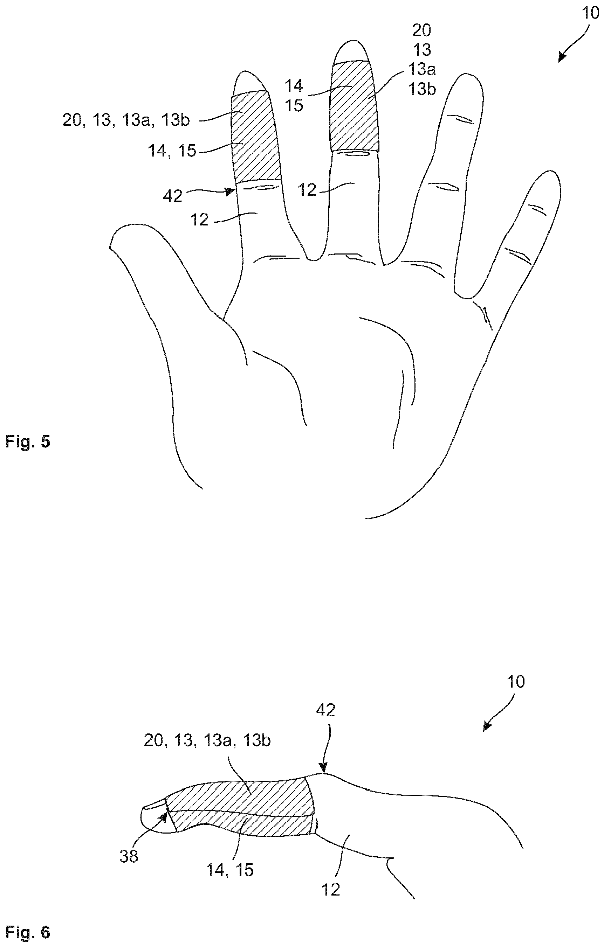

Die Ausführungsform in Fig. 5 zeigt ein Hafttape 14 aus zwei Elementen 15, die jeweils um den Zeige- und Mittelfinger gewickelt verlaufen. Das Hafttape 14 verläuft von der Fingerkuppe bis zum mittleren Fingergelenk 42 der Finger 12 und umläuft den Finger 12 mindestens einmal. Die Endbereiche 36 des Hafttapes 14 überlappen sich derart, dass der Finger 12 mindestens einmal umschlossen wird. Die Überlappung liegt bevorzugt auf der Fingeraußenseite oder an der Seite des Fingers 12, d.h. in dem Bereich, in dem das Hafttape mit geringster Wahrscheinlichkeit mit dem Ball in Berührung kommt. Ein weiteres Element 15 des Hafttapes 14 der gleichen Ausführungsform könnte ebenso wiederholt im hinteren Bereich des Fingers 12 angeordnet sein, sodass ein Finger 12 mit zwei einzelnen Elementen 15 umschlossen wird. Ebenso kann jeder Finger mit einem derartigen Element 15 des Hafttapes 14 umwickelt werden.

Fig. 6 zeigt eine Seitenansicht des Zeigefingers aus Fig.5. Die Überlappung der Endbereiche 36 ist in dieser Ansicht sichtbar.

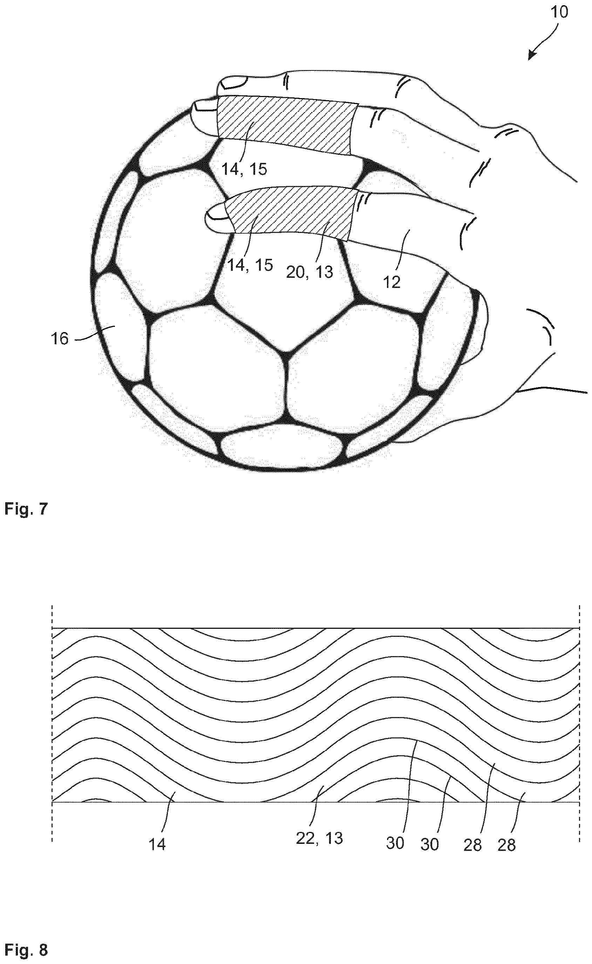

Die Darstellung in Fig. 7 zeigt eine Hand 10 mit angebrachtem Hafttape 14, die einen Ball 16 greift. Das Hafttape 14 entspricht der Ausführungsform aus den Figs. 5 und 6. Die Oberfläche 20 der Kunststofffolie als Trägerband 13 des Hafttapes 14 tritt dabei mit dem Ball 16 in Kontakt. Die erste haftende Beschichtung 22 (nicht sichtbar) stellt durch einen Kleber eine haftende Verbindung zwischen den Fingern 12 und dem Hafttape 14 her. In der derartigen Ausführungsform kann die Haftkraft H1 zwischen Finger 12 und Hafttape 14 gleich groß wie die Haftkraft H2 zwischen Ball 16 und Hafttape 14 sein, da durch die Überlappung der Endbereiche 36, sichtbar in Fig. 6, das Element 15 des Hafttapes 14 den Finger 12 einmal komplett umschließt und somit nicht durch den Kontakt mit dem Ball 16 vom Finger 12 abgezogen wird.

In Fig. 8 ist eine erste Oberfläche 18 des Hafttapes 14 dargestellt. Die erste Oberfläche 18 besitzt eine Struktur, die aus Streifen 28 und Zwischenräumen 30 gebildet wird. Die Streifen 28 bilden die erste haftende Beschichtung 22 aus. Die parallel verlaufenden, wellenförmigen Streifen 28 dienen dazu, das Hafttape 14 besonders elastisch auszubilden. Dabei wäre auch eine punktuelle oder anderweitig strukturierte, z.B. wellenförmig oder wabenförmige Aufbringung des Klebers möglich. Es ist denkbar, dass die hautweisende Seite des Trägerbands Vertiefungen aufweist, in denen Klebedepots eingelassen werden können, so dass neben den punktuellen Klebebereichen das Trägerband vollflächig auf der menschlichen Haut aufliegt. Gleichfalls kann eine Waben- oder Noppenstruktur auf der handweisenden Seite vorgesehen sein, so dass Schweiß durch die Profilstruktur abgeführt werden kann, was den Tragekomfort erhöht.

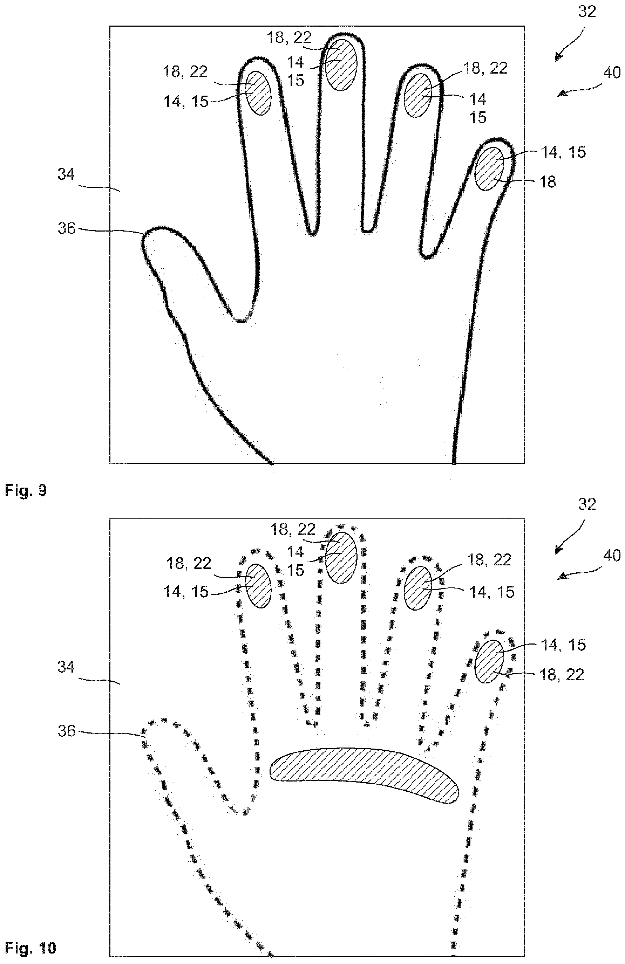

Fig. 9 zeigt ein Set 40 mit einer Abziehhilfe 32 in Form einer Folie 34. Diese Abziehhilfe 32 kann ein Hafttape 14 nach Fig. 3 an einer gewünschten Stelle einer Hand 10 eines Sportlers platzieren. Auf der Abziehhilfe 32 ist eine Auflagenschablone 36 in Handform aufgedruckt. An den Fingerkuppen der Handform sind die Elemente 15 des Hafttapes 14 auf die Abziehhilfe 32 mit der zweiten Oberfläche 20 aufgeklebt. In der Ansicht ist die erste Oberfläche 18 des Hafttapes 18 sichtbar, die mit den Fingern 12 (nicht dargestellt) in Kontakt tritt. Ein Sportler kann die Abziehhilfe 32 dafür benutzen, dass die Elemente 15 des Hafttapes 14 an einer gewünschten Stelle wiederholt positioniert werden können. Dabei kann eine spezielle Abziehhilfe 32 bzw. ein spezielles Set 40 für jeden Sportler entwickelt und produziert werden. Die Auflagenschablone 36 und die Elemente 15 des Hafttapes 14 können dabei an die Abmessungen unterschiedlicher Hände 10 von unterschiedlichen Sportlern angepasst werden. Zum Anbringen des Hafttapes 14 an einer Hand 10 positioniert der Sportler seine Hand so in der Auflagenschablone 36, dass diese genau auf der aufgedruckten Handform der Auflagenschablone 36 aufliegt. Nun kann er die Abziehhilfe 32 zunächst an seine Hand 10 (nicht dargestellt) drücken, um das Hafttape 14 mit der Hand 10 flächig und komplett zu verbinden, und anschließend die Abziehhilfe 32 wieder abziehen. Das Hafttape 14 verleibt dadurch an der gewünschten Stelle an der Hand 10.

Eine weitere Ausführungsform eines Sets 40 zeigt Fig. 10. Hierbei setzt sich das Hafttape 14 aus fünf Elementen 15 zusammen. Die Auflagenschablone 36 weist eine Perforation auf der Abziehhilfe 32 auf, so dass die Handschablone 36 aus der Abziehilfe 32 entnommen werden kann. Somit kann ein Benutzer im ersten Schritt die Handschablone 36 mit dem Hafttape 14 an einer Hand aufkleben, wobei die zweite Oberfläche 20 weiterhin von der Handschablone 36 überdeckt ist. Erst kurz vor Spielbeginn kann die Handschablone 36 ebenfalls entfernt werden, so dass die haftende Wirkung der zweiten Oberfläche 20 sich voll entfalten kann. In den weiteren Ausführungen und im weiteren Vorgehen für die Anwendung des Sets 40 entspricht diese Ausführungsform der aus Fig. 9.

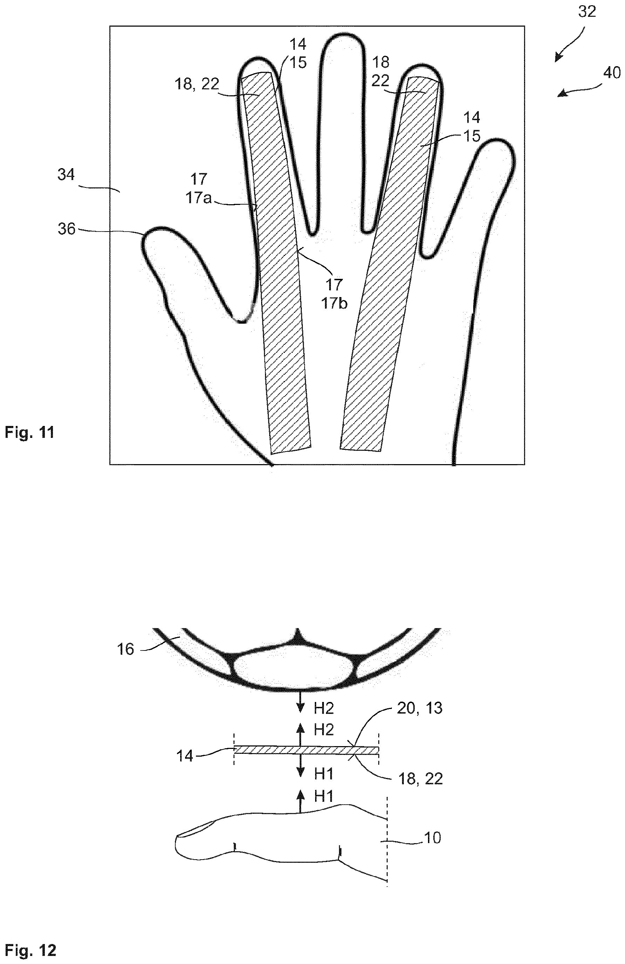

In Fig. 11 ist eine weitere Ausführungsform eines Sets 40 dargestellt. Diese Abziehhilfe kann ein Hafttape 14 nach Fig. 1 an einer Hand 10 eines Sportlers platzieren. Im Gegensatz zu Fig. 1 ist in dieser Ansicht nicht die zweite Oberfläche 20 sichtbar, sondern die erste Oberfläche 18 bzw. die erste haftende Beschichtung 22. Die Anwendung der Abziehhilfe 32 erfolgt vergleichbar zu den Ausführungsformen in den Figs. 9 und 10.

In Fig. 12 ist eine schematische Darstellung der Haftkräfte H1 und H2 dargestellt. Zwischen dem Finger 10 und der ersten Oberfläche 18 des Hafttapes 14 herrscht die Haftkraft H1, welche durch die erste haftende Beschichtung 22 herbeigeführt wird. Zwischen der zweiten Oberfläche 20 des Hafttapes 14 und einem Ball 16 herrscht die Haftkraft H2. Diese wird durch die elastische Kunststofffolie als Trägerband 13 herbeigeführt. Bevorzugt ist H1 größer als H2 oder zumindest gleich groß wie H2.

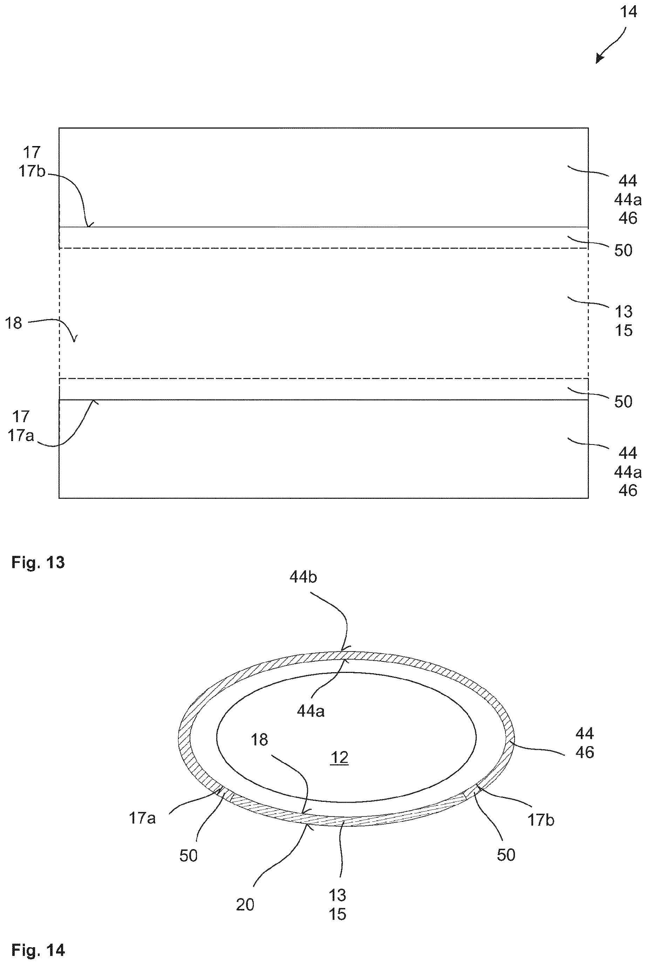

Fig. 13 zeigt ein Hafttape 14, das aus einer elastischen Kunststofffolie als Trägerband 13 sowie zwei Tapes 44 besteht. Die beiden Tapes 44 sind dabei über die beiden Randabschnitte 17,17a, 17b über jeweils einen Überlappungsbereich 50 mit der Kunststofffolie als Trägerband 13 verbunden. Das erste Tape 44 und das zweite Tape 44 können als Kinesiotapes 46 ausgebildet sein. Dabei sind die beiden Randbereiche 17a, 17b bzw. die Überlappungsbereiche 50 des Trägerbands 13 parallel zueinander angeordnet. Ebenso sind die beiden Überlappungsbereiche 50 gleich breit ausgebildet. Die Kunststofffolie als Trägerband 13 ist hierbei mit der ersten Oberfläche 18 und die beiden Tapes 44 mit der haftenden Oberfläche 44a sichtbar. Demnach wird die Seite des Hafttapes 14 abgebildet, die mit einer Hand 10 bzw. einem Finger 12 in Verbindung kommt und daran anhaftet. In der vorliegenden Ausführung erfolgt die Haftung über die beiden Tapes 44, sodass die elastische Kunststofffolie als Trägerband 13 nicht mit einer ersten haftenden Beschichtung 22 ausgebildet werden muss. Über die beiden haftenden Oberflächen 44a erfolgt auch die haftende Verbindung zwischen der Kunststofffolie als Trägerband 13 und den beiden Tapes 44. Vorliegend ist lediglich eine Form eines Hafttapes, bestehend aus einer elastischen Kunststofffolie als Trägerband 13 sowie zumindest einem Tape 44, dargestellt. Dabei ist auch eine Ausführung mit lediglich einem Tape 44 möglich. Ebenso können die Gesamtgeometrie sowie die Geometrie der Kunststofffolie als Trägerband 13 sowie der Tapes 44 anders ausgestaltet sein.

In Fig. 14 ist schematisch eine Schnittdarstellung eines Hafttapes 14, das in einer geschlossenen Form um einen Finger 12 angeordnet ist, dargestellt. Die schematische Darstellung zeigt eine Draufsicht auf eine Fingerkuppe aus einer Position in Verlängerung der Fingerkuppe, sodass der Finger 12 quasi im Querschnitt dargestellt wird. Um den Umfang des Fingers 12 ist ein Hafttape 14 angeordnet, wobei dieses in der schematischen Darstellung beabstandet vom Finger 12 dargestellt wird. Dies entspricht keiner realistischen Darstellung, da das Hafttape 14 normalerweise an dem Finger haftend anliegt. Die Darstellung dient lediglich zur Übersichtlichkeit. Vorliegend besteht das Hafttape 14 aus einer Kunststofffolie als Trägerband 13 und lediglich einem Tape 44. Vor Anbringung des Hafttapes 14 um den Finger ist die Kunststofffolie als Trägerband 13 lediglich in einem Randbereich 17a mit dem Tape 44 über einen Überlappungsbereich 50 verbunden. Für die Anbringung um einen Finger 12 wird das Hafttape 14, dies bedeutet im vorliegenden Fall das Tape 44, derart um den Finger herumgelegt, dass das zweite Ende des Tapes 44 ebenso die Kunststofffolie als Trägerband 13 in einem zweiten Randbereich 17b berührt und einen zweiten Überlappungsbereich 50 ausbildet. Die erste Oberfläche 18 ist dabei auf der Innenseite, d. h. in Richtung der Fingeroberfläche angeordnet. Diese weist in der vorliegenden Ausführungsform jedoch keine erste haftende Beschichtung 22 auf. Die haftende Oberfläche 44a des Tapes 44 ist dabei ebenso in Richtung Fingeroberfläche angeordnet und bildet in dieser Ausführungsform den haftenden Bereich aus. Die nicht haftende Oberfläche 44b des Tapes 44 ist nach außen gerichtet.

### Bezugszeichenliste

- 10: Hand
- 12: Finger
- 13: elastisches Trägerband
- 13a: Polyurethanfolie
- 13b: Silikonfolie
- 14: Hafttape
- 15: Element des Hafttapes
- 16: Ball
- 17: Randabschnitt
- 17a: Randabschnitt
- 17b: Randabschnitt
- 18: erste Oberfläche
- 20: zweite Oberfläche
- 22: erste haftende Beschichtung

- 26: Handfläche
- 28: Streifen
- 30: Zwischenraum
- 32: Abziehhilfe
- 34: Folie
- 36: Auflagenschablone
- 38: Endbereich
- 40: Set
- 42: mittleres Fingergelenk

- 44: Tape
- 44a: haftende Oberfläche
- 44b: nichthaftende Oberfläche
- 46: Kinesiotape
- 48: Tape
- 50: Überlappungsbereich

## Patentansprüche

1. Hafttape (14) zur Anbringung an einer Hand (10) und / oder an mindestens einem Finger (12) zur Unterstützung einer Haftung eines Balles (16) oder dergleichen an der Hand (10) und / oder an den Fingern (12) eines Ballspielers bzw. einer Ballspielerin, umfassend zumindest ein, bevorzugt mehr als ein Element (15) mit einer ersten Oberfläche (18), einer zweiten Oberfläche (20) und zumindest einen Randabschnitt (17a, 17b), **dadurch gekennzeichnet, dass** das Element (15) aus einem elastischen Trägerband (13), bevorzugt aus einer Kunst-, Kautschuk- oder Silikonfolie, insbesondere aus einer Polyurethanfolie (13a) oder Silikonfolie (13b), besteht, das intrinsische Adhäsionseigenschaften oder Selbstklebeeigenschaften aufweist, wobei die erste Oberfläche (18) zumindest bereichsweise eine haftende Beschichtung (22) aufweist, oder zumindest ein Randabschnitt (17) mit einem zweiten Tape (44), insbesondere Kinesiotape (46), haftend verbunden ist, das eine haftende Oberfläche (44a) und eine nichthaftende Oberfläche (44b) aufweist, wobei die erste Oberfläche (18) des Trägerbands (13) oder die haftende Oberfläche (44a) des Tapes (44) zumindest teilweise um einen Finger (12) und / oder die Hand (10) gewickelt und / oder flächig und / oder punktuell auf einem Finger (12) und / oder auf die Hand (10) aufklebbar ist, wobei die zweite Oberfläche (20) des elastischen Trägerbands (13), bevorzugt aus einer Kunst-, Kautschuk- oder Silikonfolie, insbesondere der Polyurethanfolie (13a) oder Silikonfolie (13b), mit einem Ball (16) kontaktierbar ist und an einem Ball (16) haftbar ist.

2. Hafttape (14) nach Anspruch 1, **dadurch gekennzeichnet, dass** die Haftkraft H1 der Beschichtung (22) eine größere Haftwirkung zwischen dem Finger (12) bzw. der Hand (10) und dem Hafttape (14) aufweist als die Haftkraft H2 zwischen dem Trägerband (13) und einem Ball (16), sodass H1 > H2.

3. Hafttape (14) nach Anspruch 1 oder 2, **dadurch gekennzeichnet, dass** das Trägerband (13) auf der zweiten Oberfläche (20) profiliert ausgebildet ist, insbesondere eine Fischgrätenstruktur oder eine Haifischhautstruktur aufweist.

4. Hafttape (14) nach einem der vorhergehenden Ansprüche, **dadurch gekennzeichnet, dass** das Trägerband (13) eine Netzstruktur aufweist, insbesondere als Netz, Gaze oder Gewebe ausgebildet ist, und eine Mehrzahl an Löchern aufweist, wobei die Löcher alle die gleiche Form und Größe oder unterschiedliche Größen und Formen aufweisen können.

5. Hafttape (14) nach einem der vorhergehenden Ansprüche, **dadurch gekennzeichnet, dass** die Struktur der haftenden Beschichtung (22) als zickzackförmige oder wellenförmige, parallele Streifen (28) auf der ersten Oberfläche (18) ausgebildet ist, sodass zwischen den einzelnen Streifen (28) ein Zwischenraum (30) ausgebildet wird.

6. Hafttape (14) nach einem der vorhergehenden Ansprüche, **dadurch gekennzeichnet, dass** mindestens zwei Finger (12) mindestens einer Hand (10) im Bereich von den Fingerspitzen bis zu den mittleren Fingergelenken (42) mit jeweils einem Element (15) derart umwickelt werden, dass sich die Endbereiche (38) des Hafttapes (14) an jedem Finger (12) um mindestens 3 mm überlappen, oder dass das Tape (44) um jeweils einen Finger (12) und / oder die Hand (10) wickelbar ist, wobei ein zweiter Randabschnitt (17b) des Tapes (44) nach dem Umwickeln ebenso mit dem Element (15) verbindbar ist, sodass eine geschlossene Form entsteht.

7. Hafttape (14) nach einem der vorhergehenden Ansprüche, **dadurch gekennzeichnet, dass** das Tape (44) an einem geradlinigen Randabschnitt (17a) mit dem Trägerband (13) linienförmig verbunden ist, wobei sich das Tape (44) und das Trägerband (13) teilweise überlappen.

8. Hafttape (14) nach Anspruch 7, **dadurch gekennzeichnet, dass** ein zweites Tape (44) mit einem zweiten Randabschnitt (17b) mit dem Trägerband (13) verbunden ist, wobei die beiden Randabschnitte (17a, 17b) bevorzugt parallel zueinander verlaufen.

9. Hafttape (14) nach einem der vorhergehenden Ansprüche, **dadurch gekennzeichnet, dass** das Hafttape (14) vor einem Gebrauch auf mindestens einer Abziehhilfe (32) angebracht ist.

10. Hafttape (14) nach einem der vorhergehenden Ansprüche, **dadurch gekennzeichnet, dass** das Hafttape (14) eine Farbgebung aufweist, wobei diese einfarbig, gestreift oder gepunktet ausgestaltet ist.

11. Set (40) umfassend mindestens ein Hafttape (14) nach einem der vorhergehenden Ansprüche, **dadurch gekennzeichnet, dass** das mindestens eine Element (15) des Hafttapes (14) in einer Form auf einer Abziehhilfe (32) angeordnet ist, so dass beim Auflegen einer Hand (10) auf eine Auflagenschablone (36) auf der Abziehhilfe (32) das mindestens eine Element (15) an der vorgesehenen, zu beklebenden Stelle an der Hand (10) angeordnet ist und an dieser Stelle an der Hand (10) haftet und von der Abziehhilfe (32) abgezogen werden kann.

12. Set (40) nach Anspruch 11, **dadurch gekennzeichnet, dass** die Schablone (36) als Handform und / oder Fingerform ausgebildet ist und auf die Abziehhilfe (32) aufgedruckt, eingestanzt oder perforiert ist.

13. Set (40) nach Anspruch 11 oder 12, **dadurch gekennzeichnet, dass** das Set (40) für Links- und Rechtshänder, sowie für unterschiedliche Handgrößen, insbesondere Damen, -Herren und Kindergrößen unterschiedlich ausgebildet ist, wobei das Hafttape (14) für verschiedene Größen unterschiedliche Abmessungen aufweist.

14. Set (40) nach Anspruch 11 oder 13, **dadurch gekennzeichnet, dass** das Set für Damen und Herren derart unterschiedlich ausgebildet ist, dass das Hafttape (14) unterschiedliche Haftkräfte H1 und / oder H2 für Damen und Herren aufweist, wobei die Haftkräfte H1 und / oder H2 an die Geschwindigkeiten und Beschleunigungen des Balles (16) bei einem Herren- bzw. Damen-Ballspiel angepasst sind.

15. Rolle mit einem Hafttape (14) nach einem der Ansprüche 1 bis 10, **dadurch gekennzeichnet, dass** das Hafttape (14) in Form einer Kleberolle aufgewickelt ist und an der ersten Oberfläche (18) eine Abziehhilfe aufweist, die nach dem Abwickeln des Hafttapes (14) von der Rolle abziehbar ist.
